# EUROPÄISCHE PATENTSCHRIFT

(11) **EP 2 545 391 B1**
(45) Veröffentlichungstag und Bekanntmachung des Hinweises auf die Patenterteilung: **21.09.2016**
(21) Anmeldenummer: 11700089.3
(22) Anmeldetag: 11.01.2011
(51) Int. Cl.: G01S 7/40, G01S 13/93, G01S 7/03, G01S 13/02

(54) **RADARSENSOR UND VERFAHREN ZUR STEUERUNG DESSELBEN ZUR REDUZIERUNG DES ÜBERSPRECHENS VON DIGITALSIGNALEN AUF DAS HF-RADARSIGNAL**
RADAR SENSOR AND METHOD FOR CONTROLLING THE LATTER IN ORDER TO REDUCE THE CROSSTALK FROM DIGITAL SIGNALS ONTO THE RF RADAR SIGNAL
CAPTEUR À RADAR ET PROCÉDÉ DE COMMANDE ASSOCIÉ POUR RÉDUIRE LA DIAPHONIE DE SIGNAUX NUMÉRIQUES SUR LE SIGNAL RADAR HF

(30) Priorität: 08.03.2010 DE 102010002638
(43) Veröffentlichungstag der Anmeldung: 16.01.2013
(73) Patentinhaber: Robert Bosch GmbH, 70442 Stuttgart (DE)
(72) Erfinder: HIMMELSTOSS, Armin, 71554 Weissach im Tal (DE); STEINBUCH, Dirk, 71299 Wimsheim (DE)
(86) Internationale Anmeldenummer: PCT/EP2011/050267
(87) Internationale Veröffentlichungsnummer: WO 2011/110371

(56) Entgegenhaltungen:
- EP-A1- 1 821 118
- WO-A1-2004/048999
- US-A- 5 508 706
- US-A1- 2009 251 362

## Beschreibung

Die Erfindung betrifft einen Radarsensor mit einer Sende- und Empfangseinrichtung zur Erzeugung eines Radarsignals, einer Steuereinrichtung und einer Schnittstelleneinheit für eine digitale Schnittstelle zur Steuerung des Radarsensors. Die Erfindung betrifft weiterhin ein Verfahren zur Steuerung eines solchen Radarsensors.

Radarsensoren werden beispielsweise in Kraftfahrzeugen zur Erfassung des Umfelds des Fahrzeugs und zur Ortung vorausfahrender Fahrzeuge eingesetzt. Sie können als unabhängige Abstandswarnsysteme benutzt werden oder auch Teil eines Fahrassistenzsystems sein.

Aus Platz-, Gewichts- und Kostengründen werden sie in Kraftfahrzeugen üblicherweise als integrierte Radarsensor-Bauelemente, sogenannte Monolithic Microwave Integrated Circuits (MMIC), ausgeführt, bei denen die Sende- und Empfangseinrichtung für das Radarsignal zusammen mit Steuereinrichtungen und weiteren zum Betrieb des Radarsensors benötigten Schaltungsteilen integriert auf einem Chip aufgebaut sind. Aufgrund einer Vielzahl von Einstellmöglichkeiten und aus Sicherheitsgründen zu überwachenden Betriebszuständen ist es kaum möglich, die Einstellung von Betriebsparametern zur Steuerung des Sensors und das Auslesen von Betriebszuständen analog über separate Anschlüsse (Pins) des integrierten Radarsensor-Bauelements zu realisieren. Zur Steuerung und zum Auslesen bietet sich daher an, eine Schnittstelleneinheit mit in den Radarsensorbaustein zu integrieren und Steuerungs- und Zustandsinformationen über eine digitale Schnittstelle auszutauschen. Dabei ist eine serielle Schnittstelle besonders geeignet, um die Anzahl der Pins am Gehäuse des Radarsensor-Bauelements möglichst klein zu halten. Eine geeignete Schnittstelle weist beispielsweise der Serial Peripheral Interface Bus (SPI-Bus) auf, der mit drei oder vier Pins einen bidirektionalen Datenaustausch ermöglicht.

Beispiele für Radarsensoren mit MMICs zeigen US 5 508 706 A und US 2009/251362 A1. Aus WO 2004/048999 A1 und EP 1 821 118 A1 sind Radarsensoren bekannt, bei denen die Ausgangsleistung einstellbar ist.

Zum Betrieb der digitalen seriellen Schnittstelle werden typischerweise Digitalsignale, z.B. als Taktsignal und als Datensignal, mit einer Frequenz im Bereich von einigen 100 Kilohertz (KHz) bis einigen Megahertz (MHz) eingesetzt. Aufgrund des integrierten Aufbaus des Radarsensors ist ein Übersprechen der Digitalsignale in die Sende- und Empfangseinrichtung des Radarsensors jedoch unvermeidbar. Diese führt zum Auftreten von störenden Seitenlinien oder -bändern im Frequenzspektrum des abgestrahlten Radarsignals beim Betrieb der digitalen Schnittstelle. Da die Seitenbänder außerhalb des für den Radarsender zugelassenen Frequenzbandes liegen, kann durch die Seitenbänder eine Überschreitung erlaubter Strahlungsgrenzwerte eintreten.

Es ist daher eine Aufgabe der vorliegenden Erfindung, einen Radarsensor mit einer Sende-und Empfangseinrichtung, einer Steuereinrichtung und einer Schnittstelleneinheit für eine digitale Schnittstelle zur Steuerung der Sende- und Empfangseinrichtung, zu schaffen, bei der eine Abstrahlung von Sendeleistung auf Seitenlinien, die durch die Schnittstellen hervorgerufen werden, möglichst verringert sind. Es ist eine weitere Aufgabe der vorliegenden Erfindung, ein Verfahren zur Steuerung eines Radarsensors zu schaffen, bei dem Störstrahlung auf solchen Seitenlinien möglichst gering ist.

Diese Aufgabe wird gelöst durch einen Radarsensor und ein Verfahren mit den jeweiligen Merkmalen der unabhängigen Ansprüche. Weitere vorteilhafte Ausgestaltungen und Weiterbildungen sind in den jeweiligen Unteransprüchen angegeben.

Der erfindungsgemäße Radarsensor ist dadurch ausgezeichnet, dass eine der Leitungen der digitalen Schnittstelle mit der Steuereinrichtung verbunden ist, wobei die Steuereinrichtung derart ausgebildet ist, dass bei Vorliegen eines vorbestimmten Pegels an dieser Leitung die Ausgangsleistung der Sende- und Empfangseinrichtung abgesenkt wird. Durch die direkte Kopplung der Ausgangsleistung an den Pegel auf einer der Leitungen der digitalen Schnittstelle wird erreicht, dass bei einer Benutzung der digitalen Schnittstelle zur Datenübertragung zur Steuerung des Radarsensors oder zum Auslesen von Betriebszuständen des Radarsensors die Ausgangsleistung der Sende- und Empfangseinrichtung unmittelbar reduziert wird. Mit der verringerten Ausgangsleistung sinkt auch die Strahlungsleistung im störenden Seitenband. Das störende Seitenband tritt somit nach wie vor auf, Grenzwerte können aufgrund der verringerten Ausgangsleistung jedoch leicht eingehalten werden. Durch die Doppelnutzung der Leitung der Schnittstelle für die Schnittstelle selbst und zur Leistungsabsenkung kann zudem ein ansonsten zur Absenkung der Ausgangsleistung erforderlicher Anschlusspin eingespart werden.

In einer bevorzugten Ausgestaltung ist die digitale Schnittstelle des Radarsensors eine serielle Schnittstelle mit Leitungen für ein Auswahlsignal, ein Taktsignal und mindestens ein Datensignal. Die Leitung für das Auswahlsignal wird zur Absenkung der Ausgangsleistung der Sende- und Empfangseinrichtung mit der Steuereinrichtung verbunden. Die Auswahlleitung wird üblicherweise eingesetzt, um eine Schnittstelle für eine Datenübertragung zu aktivieren. Besonders bevorzugt ist, den vorbestimmten Pegel an der Leitung für das Auswahlsignal, bei dem die Ausgangsleistung der Sende- und Empfangseinrichtung abgesenkt wird, so zu wählen, dass sie einem Pegel entspricht, bei dem die Schnittstelle zu einer Datenübertragung aktiviert wird. Die Kopplung des Absenkens der Ausgangsleitung der Sende- und Empfangseinrichtung an das Auswahlsignal stellt sicher, dass eine Absenkung während eines jeden Betriebs der Schnittstelle erfolgt.

Im folgenden wird die Erfindung anhand eines Ausführungsbeispiels mit Hilfe von zwei Figuren näher erläutert.

Es zeigen:
- Fig. 1: ein Blockdiagramm eines erfindungsgemäßen Radarsensors; und
- Fig. 2: ein Flussdiagramm eines Verfahrens zur Steuerung eines Radarsensors.

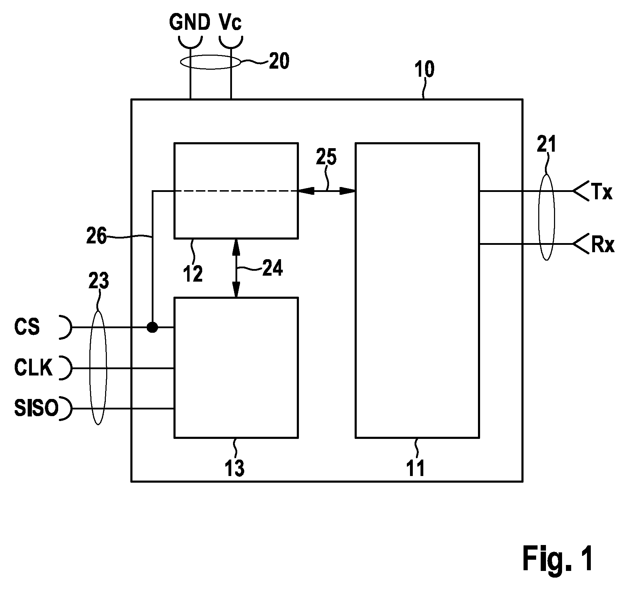

Fig. 1 zeigt einen Radarsensor, ausgeführt als integriertes MMIC-Bauelement 10 in einem Blockschaltbild. Der Radarsensor umfasst eine Sende- und Empfangseinrichtung 11 für ein hochfrequentes Radarsignal, eine Steuereinrichtung 12 und eine Schnittstelleneinheit 13.

Die Sende- und Empfangseinrichtung 11 kann beispielsweise einen Hochfrequenzoszillator, einen Empfangsverstärker sowie Mischer zur Erzeugung von Zwischenfrequenzen umfassen. Der Aufbau solcher Sende- und Empfangseinrichtungen 11 ist bekannt und nicht Gegenstand der vorliegenden Anmeldung. Die Erfindung kann unabhängig vom genauen Aufbau mit jedem Radarsensor, bei dem ein Übersprechen von digitalen Signalen einer Schnittstelle des Radarsensors auftritt, umgesetzt werden. Insbesondere ist dies aufgrund der kompakten Bauweise bei monolitisch integrierten Radarsensoren der Fall.

Als Anschlusspins sind aus dem MMIC-Bauelement 10 Stromanschlüsse 20 zur Versorgung des Radarsensors herausgeführt, beispielhaft eine Masseleitung GND und eine positive Stromversorgungsleitung Vc. Weiter sind Hochfrequenzanschlüsse 21 herausgeführt, beispielhaft hier eine Sendeleitung Tx zur Abstrahlung des Radarsignals und eine Empfangsleitung Rx zum Empfang eines reflektierten Radarsignals. Die Zahl der Hochfrequenzanschlüsse 21 ist dabei beispielhaft, es ist auch denkbar, mehrere Sendeleitungen Tx und/oder mehrere Empfangsleitungen Rx vorzusehen, z.B. in Verbindung mit sogenannten Phased-Array-Antennenanordnungen. Auch ist denkbar, die Erfindung in einem integrierten Radarbaustein einzusetzen, die nur eine Sendeeinheit, aber keine Empfangseinrichtung aufweist.

Weitere Anschlüsse des MMIC-Bauelements 10 sind die Anschlüsse einer digitalen Schnittstelle 23, die der Schnittstellenheit 13 zugeführt werden. Beispielhaft ist die Schnittstelle 23 als sogenannte Dreileiterschnittstelle ausgeführt, die eine besondere Ausführungsform des Serial Peripheral Interface Bus (SPI-Bus) darstellt. Sie weist eine Leitung für ein Auswahlsignal CS (chip select), eine Leitung für ein Taktsignal CLK (clock) und Leitung für ein Datensignal SISO (signal in - signal out) auf.

Innerhalb des MMIC-Bauelements 10 ist die Schnittstelleneinheit 13 über eine interne Verbindung 24 mit der Steuereinrichtung 12 verbunden, und diese wiederum über eine interne Verbindung 25 mit der Sende- und Empfangseinrichtung 11. Der Schnittstelleneinheit 13 wird üblicherweise eine anstehende Datenübertragung durch einen Pegelwechsel des Auswahlsignals CS der Schnittstelle 23 angekündigt. Danach erfolgt eine Aufschaltung des Taktsignals CLK, meist ein (symmetrisches) Rechtecksignal im Bereich von einigen 100 Kilohertz (kHz) bis einigen Megahertz (MHz) und anschließend die Übermittlung von Informationen über das Datensignal SISO. Die empfangenen und von der Schnittstelleneinheit 13 ausgewerteten Informationen bewirken über die interne Verbindung 24 beispielsweise eine Einstellung von Sende- und Empfangsparametern der Sende- und Empfangseinrichtung 11. Zu diesem Zweck können in der Steuereinrichtung 12 Digital/AnalogWandler vorhanden sein, deren Ausgänge über die interne Verbindung 25 auf die Sende-und Empfangseinrichtung 11 einwirken. Umgekehrt können Betriebszustände der Sende-und Empfangseinrichtung 11 über in der Steuereinrichtung 12 vorgesehene Analog/Digital-Wandler über die Schnittstelleneinheit 13 abgefragt werden.

Bei dem erfindungsgemäßen Radarsensor wird das Auswahlsignal CS über eine weitere interne Verbindung 26 zusätzlich direkt der Steuereinrichtung 12 zugeführt. Die Steuereinrichtung 12 ist dazu ausgebildet, bei Vorliegen des elektrischen Pegels des Auswahlsignals CS, der auch die Schnittstelleneinheit 13 für eine Datenübertragung aktiviert, unmittelbar über die interne Verbindung 25 die Ausgangsleistung der Sende- und Empfangseinrichtung 11 abzusenken. Dabei kann vorgesehen sein, über einen Umschalter die entsprechende Steuerleitung der internen Verbindung 25 für die Ausgangsleistung auf einen vorgegebenen Wert zu setzen. Der Wert kann dabei fest vorgegeben sein. In einer alternativen Ausgestaltung kann vorgesehen sein, dass die Steuereinrichtung 12 einen separaten Digital/Analog-Wandler aufweist, dessen Ausgang den vorgegebenen Wert zur Einstellung der abgesenkten Ausgangsleistung bereitstellt. In diesem Fall kann die Größe der abgesenkten Ausgangsleistung, gegebenenfalls innerhalb gewisser Grenzen, über die digitale Schnittstelle 23 eingestellt werden.

Die Größe der abgesenkten Ausgangsleistung sollte in jedem Fall so bemessen sein, dass die in die Seitenbänder, die sich als Summen- und Differenzfrequenzbänder aus der Überlagerung von Radarsignal und übersprechenden Digitalsignalen der Schnittstelle 23 bilden, abgestrahlte Leistung zulässige Grenzwerte unterschreitet. Auch eine Absenkung auf eine Ausgangsleistung von Null, also eine Abschaltung des Senders, ist denkbar. Eine nur verringerte Ausgangsleistung bietet jedoch den Vorteil, dass Anwendungen wie Adaptive Cruise Control oder Object Tracking, die ein kontinuierliches Radarsignal voraussetzen, nicht unterbrochen werden. Eine kurzzeitig schlechtere Signalqualität aufgrund der verringerten Ausgangsleistung ist jedoch üblicherweise tragbar.

In einer weiteren alternativen Ausgestaltung ist auch denkbar, das Taktsignal CLK für eine Absenkung der Ausgangsleistung herauszuziehen. In einem solchen Fall kann über eine Pegel- oder Flankenerkennung ein monostabiles Zeitglied gestartet werden, so dass aus dem Taktsignal CLK ein Signal abgeleitet werden kann, das für die Zeitdauer des Anliegens des Taktsignals CLK einen konstanten Pegel aufweist und das über die interne Verbindung 26 der Steuereinrichtung 12 zur Steuerung der Ausgangsleistung zugeführt wird.

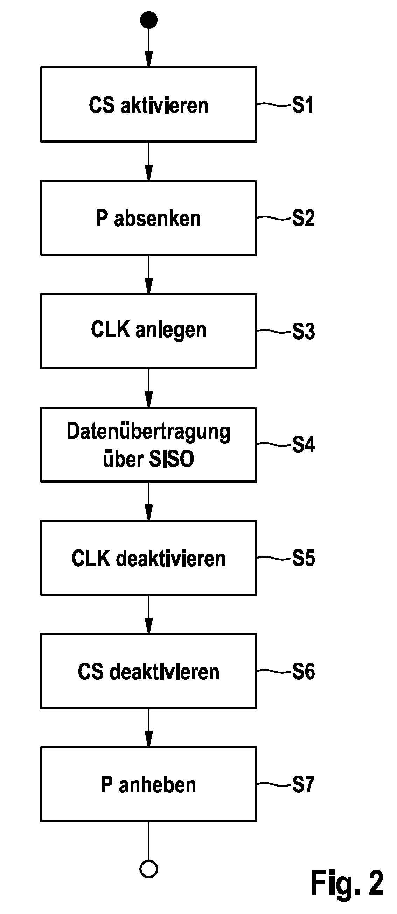

Fig. 2 zeigt ein Flussdiagramm eines erfindungsgemäßen Verfahrens zur Steuerung eines Radarsensors, das beispielsweise im Zusammenhang mit dem in Fig. 1 gezeigten MMIC-Bauelement 10 durchgeführt werden kann. Im folgenden benutzte Bezugszeichen kennzeichnen gleiche oder gleichwirkende Elemente wie im Zusammenhand mit Fig. 1 beschrieben.

In einem ersten Schritt S1 wird das Auswahlsignal CS zur Aktivierung der Schnittstelle 23 mit einem vorbestimmten Pegel beaufschlagt. Je nach eingesetzter Logikkonvention kann dieses beispielsweise einem logischen 0 oder logisch 1 entsprechen.

In einem folgenden Schritt S2 wird dieser vorbestimmte Pegel erkannt und die Ausgangsleistung P des Radarsensors auf einen vorbestimmten Wert abgesenkt. Diese Absenkung erfolgt unmittelbar und ohne dass eine Datenübertragung über die Schnittstelle 23 erforderlich wäre.

In einem nächsten Schritt S3 wird das Taktsignal CLK aufgeschaltet. Anschließend erfolgt in einem Schritt S4 ein Datenaustausch mittels des Datensignals SISO der Schnittstelle 23. Dieser Datenaustausch kann dem Einstellen von Betriebsparametern oder dem Auslesen von Betriebszuständen des Radarsensors dienen. Auch eine Veränderung der Ausgangsleistung P des Radarsensors für den normalen Betriebszustand, in dem keine Absenkung der Ausgangsleistung erfolgt, ist möglich. Eine solche Änderung der Ausgangsleistung P würde jedoch nicht sofort umgesetzt. Ein entsprechender Programmierbefehl würde zunächst nur das Ausgangssignal eines entsprechenden Digital/Analog-Wandlers, dessen Ausgang die Ausgangsleistung P im normalen Betriebszustand bestimmt, ändern. Die tatsächliche Einstellung dieser Ausgangsleistung P würde erst erfolgen, nachdem der Betriebszustand mit abgesenkter Ausgangsleistung beendet und der normale Betriebszustand wieder eingestellt wäre.

In nachfolgenden Schritten S5 und S6 wird zunächst das Taktsignal CLK von der entsprechenden Leitung der Schnittstelle 23 genommen und anschließend das Auswahlsignal CS auf den ursprünglichen Pegel zurückgesetzt, bei dem die Schnittstelleneinheit 13 nicht aktiviert ist. In einem folgenden Schritt S7 wird der ursprüngliche Pegel des Auswahlsignals CS detektiert und die Ausgangsleistung des Radarsensors auf den Wert für den normalen Betriebszustand gesetzt. Die Ausgangsleistung entspricht entweder dem vor Beginn des Verfahrens vorliegenden Wert oder einem Wert, der im Rahmen der Datenübertragung von Schritt S4 neu eingestellt wurde.

## Patentansprüche

1. Radarsensor mit einer Sende- und Empfangseinrichtung (11) zur Erzeugung eines Radarsignals mit einer einstellbaren Ausgangsleistung (P), einer Steuereinrichtung (12) und einer Schnittstelleneinheit (13) mit einer digitalen Schnittstelle (23) zur Steuerung der Sende- und Empfangseinrichtung (11), **dadurch gekennzeichnet, dass** eine der Leitungen der digitalen Schnittstelle (23) mit der Steuereinrichtung (12) verbunden ist und die Steuereinrichtung (12) dazu ausgebildet ist, die Ausgangsleistung (P) der Sende- und Empfangseinrichtung (11) abzusenken, wenn auf der mit der Steuereinrichtung (12) verbundenen Leitung der digitalen Schnittstelle ein Pegel anliegt, der anzeigt, dass die Schnittstelleneinheit (13) für eine Datenübertragung über die digitale Schnittstelle (23) aktiviert ist.

2. Radarsensor nach Anspruch 1, bei dem die digitale Schnittstelle (23) eine serielle Schnittstelle mit Leitungen für ein Auswahlsignal (CS), ein Taktsignal (CLK) und mindestens ein Datensignal (SISO) ist, und bei dem die Leitung für das Auswahlsignal (CS) diejenige Leitung der digitalen Schnittstelle ist, die mit der Steuereinrichtung (12) verbunden ist.

3. Radarsensor nach einem der Ansprüche 1 bis 2, bei dem die Absenkung der Ausgangsleistung (P) der Sende- und Empfangseinrichtung (11) auf einen vorgegebenen Wert erfolgt.

4. Radarsensor nach einem der Ansprüche 1 bis 3, der integriert als MMIC-Bauelement (10) ausgeführt ist.

5. Verfahren zur Steuerung eines Radarsensors mit einer Sende- und Empfangseinrichtung (11) zur Erzeugung eines Sendesignals (Tx) mit einer einstellbaren Ausgangsleistung (P) über eine digitale Schnittstelle (23), **dadurch gekennzeichnet, dass**
bei Aktivieren der digitalen Schnittstelle (23) zur Datenübertragung die Ausgangsleistung (P) der Sende- und Empfangseinrichtung (11) abgesenkt wird, wobei die Aktivierung der digitalen Schnittstelle anhand eines Pegels eines Auswahlsignals (CS) auf einer Leitung der digitalen Schnittstelle erkannt wird.

6. Verfahren nach Anspruch 5, bei dem ein Taktsignal (CLK) nur dann an die Schnittstelle (23) angelegt wird, wenn die Schnittstelle (23) über das Auswahlsignal (CS) für eine Datenübertragung aktiviert ist.

## Claims

1. Radar sensor having a transmission and reception device (11) for producing a radar signal having an adjustable output power (P), a control device (12) and an interface unit (13) having a digital interface (23) for controlling the transmission and reception device (11), **characterized in that** one of the lines of the digital interface (23) is connected to the control device (12) and the control device (12) is designed to lower the output power (P) of the transmission and reception device (11) when that line of the digital interface that is connected to the control device (12) is at a level that indicates that the interface unit (13) is activated for a data transmission via the digital interface (23).

2. Radar sensor according to Claim 1, in which the digital interface (23) is a serial interface having lines for a selection signal (CS), a clock signal (CLK) and at least one data signal (SISO), and in which the line for the selection signal (CS) is that line of the digital interface that is connected to the control device (12).

3. Radar sensor according to either of Claims 1 and 2, in which the output power (P) of the transmission and reception device (11) is lowered to a prescribed value.

4. Radar sensor according to one of Claims 1 to 3, which is an integrated design as an MMIC component (10).

5. Method for controlling a radar sensor having a transmission and reception device (11) for producing a transmission signal (Tx) having an adjustable output power (P) via a digital interface (23), **characterized in that** activation of the digital interface (23) for data transmission is accompanied by the output power (P) of the transmission and reception device (11) being lowered,
wherein the activation of the digital interface is identified on the basis of a level of a selection signal (CS) on a line of the digital interface.

6. Method according to Claim 5, in which a clock signal (CLK) is applied to the interface (23) only when the interface (23) is activated for a data transmission via the selection signal (CS).

## Revendications

1. Capteur radar comprenant un appareil d'émission et de réception (11) destiné à générer un signal radar avec une puissance de sortie (P) réglable, un appareil de commande (12) et une unité d'interface (13) munie d'une interface numérique (23) destinée à commander l'appareil d'émission et de réception (11), **caractérisé en ce que** l'une des lignes de l'interface numérique (23) est reliée à l'appareil de commande (12) et l'appareil de commande (12) est configuré pour abaisser la puissance de sortie (P) de l'appareil d'émission et de réception (11) lorsque sur la ligne de l'interface numérique qui est reliée à l'appareil de commande (12) est appliqué un niveau qui indique que l'unité d'interface (13) est activée pour une transmission de données par l'interface numérique (23).

2. Capteur radar selon la revendication 1, avec lequel l'interface numérique (23) est une interface série comprenant des lignes pour un signal de sélection (CS), un signal d'horloge (CLK) et au moins un signal de données (SISO), et avec lequel la ligne pour le signal de sélection (CS) est la ligne de l'interface numérique qui est reliée à l'appareil de commande (12).

3. Capteur radar selon l'une des revendications 1 à 2, avec lequel l'abaissement de la puissance de sortie (P) de l'appareil d'émission et de réception (11) est effectué à une valeur prédéfinie.

4. Capteur radar selon l'une des revendications 1 à 3, lequel est réalisé intégré sous la forme d'un sous-ensemble MMIC (10).

5. Procédé de commande d'un capteur radar comprenant un appareil d'émission et de réception (11) destiné à générer un signal émis (Tx) ayant une puissance de sortie (P) réglable par le biais d'une interface numérique (23), **caractérisé en ce que** lors de l'activation de l'interface numérique (23) en vue de la transmission de données, la puissance de sortie (P) de l'appareil d'émission et de réception (11) est abaissée, l'activation de l'interface numérique étant détectée à l'aide d'un niveau d'un signal de sélection (CS) sur une ligne de l'interface numérique.

6. Procédé selon la revendication 5, avec lequel un signal d'horloge (CLK) n'est appliqué à l'interface (23) que lorsque l'interface (23) est activée par le biais du signal de sélection (CS) pour une transmission de données.
